# EUROPÄISCHE PATENTSCHRIFT

(11) **EP 3 897 125 B1**
(45) Veröffentlichungstag und Bekanntmachung des Hinweises auf die Patenterteilung: **30.11.2022**
(21) Anmeldenummer: 19829421.7
(22) Anmeldetag: 10.12.2019
(51) Int. Cl.: A01M 7/00, A01M 21/00

(54) **VERFAHREN ZUM ABGEBEN EINER SPRITZFLÜSSIGKEIT**
METHOD FOR DISPENSING A SPRAY LIQUID
DISPOSITIF POUR DISTRIBUER UN LIQUIDE À PULVÉRISER

(30) Priorität: 20.12.2018 DE 102018222604
(43) Veröffentlichungstag der Anmeldung: 27.10.2021
(73) Patentinhaber: Robert Bosch GmbH, 70442 Stuttgart (DE)
(72) Erfinder: WALTER, Michael, 70806 Kornwestheim (DE); MEIL, Oliver, 71701 Schwieberdingen (DE); GLASBRENNER, Jochen, 70469 Stuttgart (DE); HOUIS, Nicolas, 74321 Bietigheim-Bissingen (DE); RIEGLER, Udo, 70439 Stuttgart (DE); BAIER, Tobias, 72760 Reutlingen (DE)
(86) Internationale Anmeldenummer: PCT/EP2019/084330
(87) Internationale Veröffentlichungsnummer: WO 2020/126642

(56) Entgegenhaltungen:
- EP-A1- 2 684 453
- EP-B1- 0 743 001
- DE-A1- 3 404 565
- DE-A1- 19 627 139
- DE-C2- 3 404 565
- JP-A- 2010 268 712
- US-A- 4 989 783
- US-A1- 2013 037 627

## Beschreibung

### Stand der Technik

Die Erfindung betrifft ein Verfahren nach Ansprüchen 1 bis 7 zum Abgeben einer Spritzflüssigkeit.

Gegenstand der vorliegenden Erfindung sind auch ein Steuergerät nach Anspruch 8 oder 9 (im Verlauf der Anmeldung auch Steuereinrichtung genannt) und eine landwirtschaftliche Spritzvorrichtung (nach Anspruch 10), sowie ein Computerprogramm (nach Anspruch 11) und ein maschinenlesbares Speichermedium (nach Anspruch 12).

Beim Betrieb von kamera- bzw. videobasierten Sensoren in Pflanzenschutzanwendungen ergibt sich durch die herrschenden Betriebsbedingungen die Gefahr von Schmutzablagerung auf dem Objektiv.

Durch Schmutz wie Lehm, Schlick, Sand, Kies, Staub und Spraytropfen wird der optische Strahlengang teilweise verdeckt und Licht an dem Schmutz reflektiert oder gestreut. Dadurch wird einerseits die Intensität des einfallenden Lichts verringert und andererseits die Qualität des erzeugten Bildes (z.B. Helligkeit und Kontrast) verschlechtert.

Die DE 10 2014 220 257 A1 offenbart ein Reinigungsverfahren zur Reinigung einer optisch transparenten Abdeckung einer Kamera eines Kraftfahrzeugs. Hierbei erfolgt die Reinigung abhängig von einer Farbe oder Position der Verunreinigung, einer Außentemperatur, einer Temperatur eines Reinigungsfluids oder einer Geschwindigkeit des Kraftfahrzeugs. Abhängig von den genannten Größen werden die Reinigungsparameter angepasst bzw. eingestellt. Ebenfalls relevante Stand der Technik Dokumente sind: DE 34 04 565 A1, EP 2 684 453 A1, US 2013/037627 A1, DE 196 27 139 A1.

### Offenbarung der Erfindung

Gegenstand der vorliegenden Erfindung ist ein Verfahren zum Abgeben einer Spritzflüssigkeit auf eine landwirtschaftliche Fläche mittels einer landwirtschaftlichen Spritzvorrichtung, die eine optische Erfassungseinheit zum Erfassen der landwirtschaftlichen Fläche und eine Spritzeinheit zum Abgeben der Spritzflüssigkeit aufweist, mit folgenden Schritten:
- Ermitteln eines Verschmutzungsgrades eines optischen Elements der optischen Erfassungseinheit, insbesondere mittels einer Recheneinheit; und
- Abgeben der Spritzflüssigkeit auf die landwirtschaftliche Fläche in Abhängigkeit von dem ermittelten Verschmutzungsgrad mittels der Spritzeinheit.

Weiter ist Gegenstand der vorliegenden Erfindung ein Steuergerät nach Anspruch 8 oder 9.

Gegenstand der vorliegenden Erfindung ist ferner ein Computerprogramm nach Anspruch 11, sowie ein maschinenlesbares Speichermedium nach Anspruch 12.

Gegenstand der vorliegenden Erfindung ist schließlich eine landwirtschaftliche Spritzvorrichtung nach Anspruch 10.

Die Spritzvorrichtung kann insbesondere Teil eines landwirtschaftlichen Spritzsystems wie einer landwirtschaftlichen Feldspritze beziehungsweise eines Pflanzenschutzgerätes sein oder als eine landwirtschaftliche Feldspritze beziehungsweise ein Pflanzenschutzgerät ausgebildet sein. Die Spritzvorrichtung kann auf oder an einer mobilen Einheit anordenbar und/oder angeordnet sein. Die mobile Einheit kann als Landfahrzeug und/oder Luftfahrzeug und/oder Anhänger ausgebildet sein kann. Die mobile Einheit kann insbesondere eine landwirtschaftliche Arbeitsmaschine, beispielsweise ein Traktor, eine Zugmaschine, ein Schlepper oder eine (selbstfahrende beziehungsweise autonome) Feldspritze, sein. Die Spritzvorrichtung kann auch an einer hydraulischen Vorrichtung der landwirtschaftlichen Arbeitsmaschine angebaut sein. Denkbar ist auch, dass die Spritzvorrichtung auf einer Ladefläche der landwirtschaftlichen Arbeitsmaschine aufgebaut ist. Alternativ kann die Spritzvorrichtung an der landwirtschaftlichen Arbeitsmaschine angehängt sein. Die landwirtschaftliche Spritzvorrichtung ist ausgebildet, eine landwirtschaftliche Fläche mit der Spritzflüssigkeit bzw. Behandlungsflüssigkeit, insbesondere mit einer Spritzbrühe, zu behandeln.

Unter einer landwirtschaftlichen Fläche kann eine landwirtschaftlich genutzte Fläche, eine Anbaufläche für Pflanzen oder auch eine Parzelle einer solchen Fläche beziehungsweise Anbaufläche verstanden werden. Die landwirtschaftliche Fläche kann somit ein Feld, eine Ackerfläche, ein Grünland oder eine Weide sein. Die landwirtschaftliche Fläche kann ein oder mehrere Pflanzen umfassen. Die Pflanzen können beispielsweise Nutzpflanzen, deren Frucht landwirtschaftlich genutzt wird (beispielsweise als Nahrungsmittel, Futtermittel oder als Energiepflanze), sowie Beikräuter beziehungsweise Unkräuter und Ungräser sein.

Die optische Erfassungseinheit ist ausgebildet, die landwirtschaftliche Fläche optisch zu erfassen. Demnach kann das Verfahren einen Schritt eines, insbesondere optischen, Erfassens der landwirtschaftlichen Fläche mittels der optischen Erfassungseinheit umfassen. Bevorzugt ist die optische Erfassungseinheit ausgebildet, eine optische Aufnahme, insbesondere Bilddaten und/oder Videodaten, der landwirtschaftlichen Fläche zu erzeugen. Die optische Aufnahme, insbesondere die Bilddaten und/oder Videodaten, können eine zweidimensionale und/oder dreidimensionale Darstellung der erfassten landwirtschaftlichen Fläche umfassen. Die Bilddaten und/oder Videodaten können mittels einer Recheneinheit analysiert bzw. ausgewertet werden, um einen Pflanzenparameter, insbesondere einen Wert eines Pflanzenparameters, zu ermitteln. Der Pflanzenparameter kann eine Eigenschaft und/oder ein Zustand der landwirtschaftlichen Fläche und/oder einer Pflanze auf der landwirtschaftlichen Fläche sein. Zum Beispiel kann der Pflanzenparameter ausgewählt sein aus der Gruppe bestehend aus: Art, Gattung, Sorte, Sortenreinheit, Bedeckungsgrad, insbesondere Bedeckungsgrad der landwirtschaftlichen Fläche mit Pflanzen und/oder Beikräutern, Alter, Wachstumsstufe, Entwicklungszustand, Gesundheitszustand, Krankheit, Nährstoffgehalt, Nährstoffmangel, Wassergehalt, Wassermangel, Oberflächenfeuchtigkeit, Oberflächentemperatur, Oberflächenbeschaffenheit, Empfindlichkeit gegenüber äußeren, insbesondere mechanischen Einflüssen.

Die optische Erfassungseinheit kann eine bildgebende Erfassungseinheit, bspw. eine Monokamera, Stereokamera, Time-of-Flight-Kamera oder ein Lidar, sein. Die optische Erfassungseinheit kann an, insbesondere einem Spritzgestänge, der landwirtschaftlichen Spritzvorrichtung, bevorzugt ein- und ausfahrbar, angeordnet sein. Zum Beispiel kann die optische Erfassungseinheit an einer Teilbreite der landwirtschaftlichen Spritzvorrichtung angeordnet sein. Die optische Erfassungseinheit kann entlang einer bevorzugten Bewegungs- oder Fahrtrichtung der landwirtschaftlichen Spritzvorrichtung ausgerichtet sein. Bevorzugt ist die optische Erfassungseinheit derart an der landwirtschaftlichen Spritzvorrichtung angeordnet und ausgerichtet, dass eine der der landwirtschaftlichen Spritzvorrichtung vorausliegende landwirtschaftliche, insbesondere mit der Spritzflüssigkeit zu behandelnde, Fläche erfasst wird.

Denkbar ist, dass die landwirtschaftliche Spritzvorrichtung mehrere optische Erfassungseinrichtungen umfasst, die quer zu einer Bewegungsrichtung der landwirtschaftlichen Spritzvorrichtung beabstandet an, insbesondere einem Spritzgestänge, der landwirtschaftlichen Spritzvorrichtung angeordnet sind. Jeder optischen Erfassungseinheit können ein oder mehrere Spritzdüsen der Spritzeinheit zugeordnet sein. Das heißt, mit anderen Worten, die optische Erfassungseinheit ist ausgebildet, denjenigen Teilbereich der zu behandelnden landwirtschaftlichen Fläche optisch zu erfassen, der mittels der jeweiligen Spritzdüsen mit der Spritzflüssigkeit behandelbar ist.

Die optische Erfassungseinheit weist ein optisches Element auf. Das optische Element kann transparent für sichtbares und/oder nahinfrarotes und/oder infrarotes Licht sein. Bevorzugt ist das optische Element ausgebildet, optische Strahlung im sichtbaren und/oder nahinfraroten und/oder infraroten Wellenlängenbereich in Richtung eines Detektorelements, bspw. einen CCD-Chip oder einen CMOS-Chip, der optischen Erfassungseinheit zu transmittieren. Denkbar ist, dass das optische Element die optische Erfassungseinheit zumindest teilweise nach außen bzw. zu einer Umgebung hin, begrenzt bzw. abschließt bzw. abdeckt. Das optische Element kann zum Beispiel eine Linse, ein Filter oder ein Schutzglas sein.

Unter einem Verschmutzungsgrad eines optischen Elements kann im Rahmen der vorliegenden Erfindung ein Grad bzw. Maß einer Verschmutzung des optischen Elements verstanden werden. Der Verschmutzungsgrad kann ein Vorliegen bzw. Vorhandensein einer Verschmutzung des optischen Elements und/oder ein Ausmaß bzw. ein Umfang einer Verschmutzung des optischen Elements repräsentieren. Bevorzugt ist der Verschmutzungsgrad ein Verschmutzungsgrad einer für sichtbare, nahinfrarote und/oder infrarote optische Strahlung transparenten Fläche des optischen Elements.

Unter einer Verschmutzung des optischen Elements kann eine Verunreinigung, insbesondere einer die optische Erfassungseinheit teilweise nach außen begrenzenden Fläche, des optischen Elements verstanden werden. Die Verschmutzung kann ein Feststoff oder eine Flüssigkeit sein. Zum Beispiel kann die Verschmutzung eine Ablagerung von Partikeln, bspw. Staub, und/oder Flüssigkeitstropfen, bspw. einer Spritzflüssigkeit, an dem optischen Element sein. Die Verschmutzung des optischen Elements kann eine Qualität bzw. Güte eines optischen Erfassens der landwirtschaftlichen Fläche mittels der optischen Erfassungseinheit verringern bzw. reduzieren. Denkbar ist, dass die Verschmutzung eine Schärfe einer optischen Aufnahme reduziert.

Der Verschmutzungsgrad kann eine Angabe der Form "verschmutzt" oder "nicht verschmutzt" umfassen. Alternativ kann der Verschmutzungsgrad eine Angabe der Form "verschmutzt", "teilweise verschmutzt" oder "nicht verschmutzt" umfassen. Denkbar ist auch, dass der Verschmutzungsgrad ein prozentuales Maß, bspw. in einem Bereich von größer oder gleich 0% bis kleiner oder gleich 100%, für eine Verschmutzung des optischen Elements umfasst.

Bevorzugt wird der Verschmutzungsgrad mittels einer Recheneinheit ermittelt. Denkbar ist, dass der Verschmutzungsgrad unter Verwendung einer zusätzlichen Vorrichtung an der landwirtschaftlichen Spritzvorrichtung ermittelt wird. Die zusätzliche Vorrichtung kann eine Beleuchtungsvorrichtung und/oder eine optische Fokussiervorrichtung und/oder eine akustische Sende-/Empfangseinheit umfassen. Bevorzugt beeinflusst der Betrieb der zusätzlichen Vorrichtung die optische Erfassung der landwirtschaftlichen Fläche mittels der optischen Erfassungseinheit nicht.

Die Beleuchtungsvorrichtung kann eine Lichtquelle umfassen, die ausgebildet ist, Licht, insbesondere im vom Menschen sichtbaren Wellenlängenbereich und/oder Infrarotbereich, abzugeben bzw. abzustrahlen. Die Beleuchtungsvorrichtung kann bspw. eine LED-Lampe oder eine Halogenlampe sein. Die Beleuchtungsvorrichtung ist derart relativ zu der optischen Erfassungseinheit an der landwirtschaftlichen Spritzvorrichtung angeordnet, dass von der Beleuchtungsvorrichtung abgegebenes Licht mittels der optischen Erfassungseinheit erfassbar ist, wobei die Beleuchtungseinrichtung selbst nicht mittels der optischen Erfassungseinheit erfassbar ist. Bevorzugt ist die Beleuchtungsvorrichtung seitlich an einem optischen Strahlengang der optischen Erfassungseinheit angeordnet. Die mittels der optischen Erfassungseinheit erfasste Intensität der Lichtquelle ist bevorzugt höher als eine mittels der optischen Erfassungseinheit detektierte Intensität des Sonnenlichts. Die optische Erfassungseinheit ist ausgebildet, die landwirtschaftliche Fläche bei aktiver Beleuchtungsvorrichtung zeitlich beabstandet zu erfassen, um anhand einer Verringerung der erfassten Intensität eine vorliegende Verschmutzung des optischen Elements zu erkennen bzw. den Verschmutzungsgrad des optischen Elements zu ermitteln. Denkbar ist, dass die Beleuchtungsvorrichtung und/oder die optische Erfassungseinheit mittels eines oder mehrerer Aktoren aufeinander ausgerichtet bzw. aufeinander zu gedreht werden, um die mittels der optischen Erfassungseinheit erfasste Intensität des von der Beleuchtungsvorrichtung abgegebenen Lichts zu erhöhen. Alternativ ist denkbar, dass eine weiße Fläche, bspw. ein weißer Hintergrund, oder ein Testbild, bspw. ISO 12233, in Richtung, insbesondere in einen optischen Strahlengang, der optischen Erfassungseinheit geschwenkt bzw. verfahren wird, um den Verschmutzungsgrad zu ermitteln. Hierzu kann ein von der optischen Erfassungseinheit erzeugtes Bild hinsichtlich Helligkeit, Schärfe und/oder Kontrast ausgewertet werden.

Die optische Fokussiervorrichtung kann einen Autofokussensor umfassen. Die optische Fokussiervorrichtung kann Teil der optischen Erfassungseinrichtung sein. Die optische Fokussiervorrichtung ist ausgebildet, basierend auf dem Prinzip des Phasenvergleichs und/oder der Kontrasterkennung auf ein mittels der optischen Erfassungseinheit zu erfassendes Objekt scharf zu stellen. Der Verschmutzungsgrad kann basierend auf einem Ausgangssignal der optischen Fokussiervorrichtung ermittelt werden. Je schlechter bzw. je unzuverlässiger bzw. mit je geringerer Güte die optischen Fokussiervorrichtung scharf stellt, desto höher ist der Verschmutzungsgrad des optischen Elements. Hierbei kann eine zusätzliche Beleuchtungsvorrichtung zum Beleuchten des zu erfassenden Objekts, insbesondere der landwirtschaftlichen Fläche, vorgesehen sein, um den Betrieb der optischen Fokussiervorrichtung zu verbessern.

Die akustische Sende-/Empfangseinheit kann einen oder mehrere Ultraschallsensoren, bspw. eine membrangekoppelte piezoelektrische Keramik oder einen piezoelektrischen Kunstostoff (PVDF), umfassen. Die akustische Sende-/Empfangseinheit kann an der optischen Erfassungseinheit, bevorzugt im Bereich des optischen Elements, angeordnet sein. Die akustische Sende-/Empfangseinheit ist ausgebildet, ein akustisches Signal abzugeben und eine Reflexion des abgegebenen akustischen Signals zu empfangen. Bevorzugt wird das akustische Signal in Richtung des optischen Elements abgegeben, um eine Reflexion des akustischen Signals an einer Verschmutzung an dem optischen Element zu erzeugen. Anhand einer Laufzeit und/oder einer Signalstärke des empfangenen an der Verschmutzung reflektierten akustischen Signals kann der Verschmutzungsgrad des optischen Elements ermittelt werden.

Die Spritzeinheit der landwirtschaftlichen Spritzvorrichtung ist ausgebildet, die Spritzflüssigkeit auf die landwirtschaftliche Fläche abzugeben bzw. auszubringen, um die landwirtschaftliche Fläche bzw. Pflanzen auf der landwirtschaftlichen Fläche mit der Spritzflüssigkeit zu bespritzen bzw. zu behandeln. Hierzu kann die Spritzeinheit ein oder mehrere Spritzdüsen umfassen. Die Spritzeinheit kann fluidisch mit einem Flüssigkeitstank der landwirtschaftlichen Spritzvorrichtung verbunden sein, um Spritzflüssigkeit aus dem Flüssigkeitstank den Spritzdüsen der Spritzeinheit zuzuführen.

Das Abgeben der Spritzflüssigkeit auf die landwirtschaftliche Fläche kann ein Behandeln der landwirtschaftlichen Fläche mit der Spritzflüssigkeit sein. Das Abgeben bzw. Ausbringen der Spritzflüssigkeit bzw. Behandlungsflüssigkeit auf die landwirtschaftliche Fläche bzw. auf eine Pflanze auf der landwirtschaftlichen Fläche kann auch Teil eines Behandelns der landwirtschaftlichen Fläche sein. Denkbar ist weiter, dass das Abgeben der Spritzflüssigkeit ein Behandeln der landwirtschaftlichen Fläche mit der Spritzflüssigkeit zur mechanischen Bearbeitung beziehungsweise Beschädigung beispielsweise von Beikräutern auf der landwirtschaftlichen Fläche umfasst.

Das Abgeben der Spritzflüssigkeit auf die landwirtschaftliche Fläche in Abhängigkeit von dem ermittelten Verschmutzungsgrad kann ein Abgeben in Abhängigkeit vom Vorliegen bzw. Vorhandensein einer Verschmutzung sein und/oder ein Abgeben in Abhängigkeit von einem Wert des Verschmutzungsgrades sein. Das Abgeben kann ein Abgeben einer pauschalen Menge, insbesondere Aufwandsmenge, oder eines pauschalen Volumenstroms der Spritzflüssigkeit sein. Bevorzugt umfasst das Abgeben der Spritzflüssigkeit ein Abgeben einer definierten, insbesondere von der optisch erfassten landwirtschaftlichen Fläche abhängigen, Aufwandsmenge der Spritzflüssigkeit. Das Abgeben der Spritzflüssigkeit mittels der Spritzeinheit kann mittels einer Steuereinheit gesteuert werden. Die Steuereinheit kann ausgebildet sein, zumindest ein der Spritzeinheit zugeordnetes Ventil zu steuern, um das Abgeben der Spritzflüssigkeit zu steuern. Hierzu kann die Steuereinheit ausgebildet sein insbesondere ein elektrisches, mechanisches oder pneumatisches Steuersignal, zur Steuerung eines Ventils der Spritzeinheit abzugeben.

Unter einer Spritzflüssigkeit kann im Rahmen der vorliegenden Erfindung eine landwirtschaftlich nutzbare Flüssigkeit verstanden werden. Bevorzugt ist die Spritzflüssigkeit eine Spritzbrühe. Im Rahmen der vorliegenden Erfindung kann unter einer Spritzflüssigkeit auch eine Suspension oder eine Emulsion oder eine Mischung einer Suspension und einer Emulsion verstanden werden.

Die Spritzflüssigkeit weist zumindest ein Wirkmittel auf. Das Wirkmittel kann ein Spritzmittel, das heißt ein Präparat beziehungsweise Pflanzenschutzmittel, insbesondere ein Pflanzenschutzmittelkonzentrat aufweisen. Das Wirkmittel kann demnach beispielsweise ein Herbizid, Fungizid oder ein Insektizid (Pestizid) aufweisen. Das Wirkmittel kann jedoch auch ein Düngemittel, insbesondere ein Düngemittelkonzentrat aufweisen. Das Wirkmittel kann demnach einen Flüssigdünger und/oder einen Wachstumsregulator aufweisen. Das Wirkmittel kann als Flüssigkeit oder als Feststoff, beispielsweise in Form von Granulaten, oder als voraufgelöster Feststoff, beispielsweise in Form von voraufgelösten Granulaten, ausgebildet sein.

Das Steuergerät kann Teil der landwirtschaftlichen Spritzvorrichtung sein. Bevorzugt ist das Steuergerät an der landwirtschaftlichen Spritzvorrichtung, insbesondere an oder in einer Bedienerkabine der landwirtschaftlichen Spritzvorrichtung, angeordnet. Das Steuergerät umfasst eine Recheneinheit, die eingerichtet ist, den Verschmutzungsgrad des optischen Elements der optischen Erfassungseinheit zu ermitteln. Hierzu kann das Steuergerät drahtlos oder drahtgebunden elektronisch mit der optischen Erfassungseinheit und/oder einer der optischen Erfassungseinheit zugeordneten Recheneinheit zum Ermitteln des Verschmutzungsgrads verbunden sein. Weiter ist das Steuergerät drahtlos oder drahtgebunden elektronisch mit der Spritzeinheit verbunden, um die Spritzeinheit in Abhängigkeit von dem ermittelten Verschmutzungsgrad zu steuern.

Das erfindungsgemäße Verfahren, die erfindungsgemäße Spritzvorrichtung und das erfindungsgemäße Steuergerät ermöglichen es, eine Beeinträchtigung einer Bildqualität von Bildaufnahmen der landwirtschaftlichen Fläche automatisiert und frühzeitig zu erkennen und die Abgabe der Spritzflüssigkeit an die beeinträchtigte Bildqualität anzupassen. Durch das Berücksichtigen eines beim Erfassen der landwirtschaftlichen Fläche vorliegenden Verschmutzungsgrades des optischen Elements kann eine Fehlapplikation der Spritzflüssigkeit aufgrund mangelhafter Bildqualität verhindert werden. Die vorliegende technische Lösung stellt also eine Rückfallebene für eine bildbasierte Abgabe von Spritzflüssigkeit auf eine landwirtschaftliche Fläche dar, die sicherstellt, dass Unkräuter weder unbehandelt bleiben noch mit zu geringer Aufwandsmenge behandelt werden, wodurch ein effizienter Pflanzenschutz ermöglicht und einem Ausbilden von Resistenzen vorgebeugt wird.

Vorteilhaft ist es, wenn, bevorzugt im Schritt des Abgebens der Spritzflüssigkeit, bei Überschreiten eines oberen Schwellenwertes des Verschmutzungsgrades
- die Spritzflüssigkeit dauerhaft abgegeben oder das Abgeben der Spritzflüssigkeit unterbrochen und/oder
- ein Warnsignal an einen Bediener der landwirtschaftlichen Spritzvorrichtung ausgegeben und/oder
- ein Steuersignal an eine Antriebseinheit der landwirtschaftlichen Spritzvorrichtung ausgegeben wird.

Der obere Schwellenwert kann ein absoluter oder relativer Wert für den Verschmutzungsgrad sein. Das Überschreiten des oberen Schwellwertes kann mittels Vergleichens des ermittelten Verschmutzungsgrades mit dem oberen Schwellenwert mittels einer Recheneinheit ermittelt werden. Bei Überschreiten des oberen Schwellenwertes kann die Spritzflüssigkeit bevorzugt so lange abgegeben oder das Abgeben der Spritzflüssigkeit so lange unterbrochen werden, bis der Verschmutzungsgrad kleiner oder gleich dem oberen Schwellenwert ist. Also kann das Abgeben der Spritzflüssigkeit bei Überschreiten des oberen Schwellenwertes unabhängig von, insbesondere einem Pflanzenbestand auf, der erfassten landwirtschaftlichen Fläche sein. Durch das dauerhafte Abgeben der Spritzflüssigkeit kann eine Behandlung aller Pflanzen, zumindest auf einem Teilbereich, auf der landwirtschaftlichen Fläche sichergestellt werden. Durch das Unterbrechen des Abgebens kann eine unnötige bzw. überflüssige Abgabe auf nicht zu behandelnde Teilflächen der landwirtschaftlichen Fläche verhindert werden. Das dauerhafte Abgeben bzw. Unterbrechen des Abgebens kann mittels eines Steuersignals von einer Steuereinheit der landwirtschaftlichen Spritzvorrichtung an die Abgabeeinheit gesteuert werden.

Alternativ oder zusätzlich kann bei Überschreiten des oberen Schwellenwertes der Bediener der landwirtschaftlichen Fläche mittels eines, bspw. optischen, akustischen und/oder haptischen, Warnsignals gewarnt werden. Das Warnsignal kann eine Information des Verschmutzungsgrades des optischen Elements umfassen. Weiter kann das Warnsignal eine Information dazu aufweisen, dass das Abgeben der Spritzflüssigkeit in Abhängigkeit von dem ermittelten Verschmutzungsgrad erfolgt bzw. an den ermittelten Verschmutzungsgrad angepasst wird. Zum Beispiel kann das Warnsignal die Information "Optisches Element verschmutzt; optisches Element vor Weiterfahrt reinigen" oder die Information "Optisches Element verschmutzt; dauerhafte Abgabe der Spritzflüssigkeit aktiviert; optisches Element reinigen" oder "Optisches Element verschmutzt; Abgabe der Spritzflüssigkeit unterbrochen; optisches Element reinigen" umfassen. Das Warnsignal kann mittels einer Anzeigeeinheit angezeigt oder mittels einer Ausgabeeinheit ausgegeben werden. Dadurch kann ein Bediener der landwirtschaftlichen Spritzvorrichtung unmittelbar auf die Verschmutzung des optischen Elements und die automatisierte Anpassung der Abgabe der Spritzflüssigkeit an die Verschmutzung hingewiesen werden. Alternativ oder zusätzlich kann mittels einer Steuereinheit der landwirtschaftlichen Spritzvorrichtung ein Steuersignal an eine Antriebseinheit, bspw. eine Motoreinheit oder eine Bremseinheit, der landwirtschaftlichen Spritzvorrichtung ausgegeben werden. Mittels des Steuersignals kann einem Bediener bzw. Fahrer der landwirtschaftlichen Spritzvorrichtung ein Reduzieren einer Bewegungs- bzw. Fahrgeschwindigkeit bzw. ein Abbremsen oder ein Anhalten der landwirtschaftlichen Spritzvorrichtung empfohlen bzw. vorgeschlagen werden. Alternativ oder zusätzlich kann das Steuersignal ein Reduzieren einer Bewegungs- bzw. Fahrgeschwindigkeit bzw. ein Abbremsen oder ein Anhalten der landwirtschaftlichen Spritzvorrichtung einleiten. Dadurch kann eine automatische oder manuelle Reinigung des optischen Elements ermöglicht werden.

Vorteilhaft ist es auch, wenn, bevorzugt im Schritt des Abgebens der Spritzflüssigkeit, bei Unterschreiten eines unteren Schwellenwertes des Verschmutzungsgrades die landwirtschaftliche Fläche mittels der optischen Erfassungseinheit erfasst und die Spritzflüssigkeit in Abhängigkeit von der erfassten landwirtschaftlichen Fläche auf die landwirtschaftliche Fläche abgegeben wird. Der untere Schwellenwert kann ein absoluter oder relativer Wert für den Verschmutzungsgrad sein. Der untere Schwellenwert kann kleiner oder gleich dem oberen Schwellenwert sein. Der untere Schwellenwert kann derart gewählt bzw. vorgegeben sein, dass bei einem Verschmutzungsgrad unterhalb des unteren Schwellenwerts ein optisches Erfassen der landwirtschaftlichen Fläche nicht oder lediglich unwesentlich durch eine Verschmutzung beeinträchtigt wird. Die Spritzflüssigkeit kann in Abhängigkeit von einem basierend auf der erfassten landwirtschaftlichen Fläche ermittelten Pflanzenparameter, insbesondere einem Wert des Pflanzenparameters, der landwirtschaftlichen Fläche abgegeben werden. Bevorzugt wird die Spritzflüssigkeit derart in Abhängigkeit von der erfassten landwirtschaftlichen Fläche abgegeben, dass die Spritzflüssigkeit auf mit der Spritzflüssigkeit zu behandelnde Pflanzen auf der landwirtschaftlichen Fläche abgegeben wird. Durch diese Ausgestaltung kann die Spritzflüssigkeit bedarfsgerecht und effizient auf die landwirtschaftliche Fläche abgegeben werden, solange keine wesentliche Verschmutzung des optischen Elements vorliegt.

Vorteilhaft ist es weiter, wenn das Ermitteln des Verschmutzungsgrades
- vor dem Abgeben und/oder während des Abgebens der Spritzflüssigkeit auf die landwirtschaftliche Fläche und/oder
- während eines optischen Erfassens der landwirtschaftlichen Fläche mittels der optischen Erfassungseinheit erfolgt.

Das Ermitteln des Verschmutzungsgrades mittels einer Recheneinheit der landwirtschaftlichen Spritzvorrichtung kann zeitlich vor einem Steuern bzw. Aktivieren der Spritzeinheit zur Abgabe der Spritzflüssigkeit erfolgen. Denkbar ist, dass der Verschmutzungsgrad dann ermittelt wird, wenn keine Spritzflüssigkeit abgegeben wird. Zum Beispiel kann der Verschmutzungsgrad zeitlich nach einem Transport oder einer Fahrt der landwirtschaftlichen Spritzvorrichtung zu der landwirtschaftlichen Fläche, während eines Stillstandes der landwirtschaftlichen Spritzvorrichtung und/oder während einer Bewegung auf einem Vorgewende der landwirtschaftlichen Spritzvorrichtung ermittelt werden. Alternativ oder zusätzlich kann das Ermitteln des Verschmutzungsgrades mittels einer Recheneinheit der landwirtschaftlichen Spritzvorrichtung zeitgleich bzw. gleichzeitig mit dem Abgeben der Spritzflüssigkeit auf die landwirtschaftliche Fläche erfolgen. Hierbei ist denkbar, dass der Verschmutzungsgrad permanent bzw. dauerhaft oder periodisch ermittelt wird. Alternativ oder zusätzlich kann das Ermitteln des Verschmutzungsgrades mittels einer Recheneinheit der landwirtschaftlichen Spritzvorrichtung zeitgleich bzw. gleichzeitig mit einem optischen Erfassen der landwirtschaftlichen Fläche mittels der optischen Erfassungseinheit erfolgen. Zum Beispiel kann das Ermitteln des Verschmutzungsgrades basierend auf bei einem optischen Erfassen der landwirtschaftlichen Fläche mittels der optischen Erfassungseinheit erzeugten Bilddaten erfolgen. Ein derartiges Ermitteln des Verschmutzungsgrades beeinträchtigt die optische Erfassung der landwirtschaftlichen Fläche nicht, sodass ein permanentes bzw. dauerhaftes Ermitteln des Verschmutzungsgrades möglich ist. Durch diese Ausgestaltung kann der Verschmutzungsgrad mit geringfügiger oder gar ohne Beeinträchtigung eines Betriebs der landwirtschaftlichen Spritzvorrichtung erfolgen.

Vorteilhaft ist es darüber hinaus, wenn das Verfahren einen Schritt des Reinigens des optischen Elements mittels einer Reinigungseinheit der landwirtschaftlichen Spritzvorrichtung umfasst, wobei
- der Verschmutzungsgrad vor und nach dem Reinigen des optischen Elements ermittelt wird,
- das Reinigen mittels der Reinigungseinheit in Abhängigkeit von dem vor dem Reinigen ermittelten Verschmutzungsgrad erfolgt, und
- das Abgeben der Spritzflüssigkeit auf die landwirtschaftliche Fläche in Abhängigkeit von dem nach dem Reinigen ermittelten Verschmutzungsgrad erfolgt.

Unter einem Reinigen des optischen Elements kann ein zumindest teilweises Entfernen bzw. Beseitigen einer Verschmutzung des optischen Elements, verstanden werden. Bspw. kann mittels Reinigen Staub, Schmutz, Lehm, Schlick, Sand, Kies und/oder Flüssigkeitstropfen, insbesondere der Spritzflüssigkeit, von dem optischen Element entfernt bzw. beseitigt werden. Mittels Reinigen des optischen Elements kann ein Verschmutzungsgrad des optischen Elements verringert bzw. reduziert werden. Bevorzugt ist das Reinigen ein automatisiertes Reinigen. Das Reinigen des optischen Elements kann ein fluidisches, pneumatisches und/oder mechanisches Reinigen des optischen Elements sein. Das fluidische Reinigen kann ein Reinigen mittels einer Flüssigkeit, insbesondere einer Reinigungsflüssigkeit sein. Das pneumatische Reinigen kann ein Reinigen mittels einer Luftströmung, insbesondere mittels Druckluft sein. Das mechanische Reinigen kann ein Reinigen mittels einer mechanischen Reinigungseinheit, bspw. aufweisend ein Wischerelement, sein.

Die Reinigungseinheit kann zumindest einen Teil der die optische Erfassungseinheit nach außen begrenzenden Oberfläche des optischen Elements reinigen, welcher Teil des Sichtbereichs der optischen Erfassungseinheit und/oder von einem optischen Strahlengang der optischen Erfassungseinheit umfasst wird. Die Reinigungseinheit ist an der landwirtschaftlichen Spritzvorrichtung angeordnet. Bevorzugt ist die Reinigungseinheit, insbesondere formschlüssig oder kraftschlüssig, an der optischen Erfassungseinheit angeordnet. Die Reinigungseinheit ist ausgebildet, das optische Element der optischen Erfassungseinheit zu reinigen.

Denkbar ist, dass die Reinigungseinheit eine fluidische Reinigungseinheit, insbesondere eine pneumatische Reinigungseinheit und/oder eine flüssigkeitsbasierte Reinigungseinheit, umfasst. Die pneumatische Reinigungseinheit kann ein oder mehrere Düsenelemente umfassen, um ein strömendes Fluid, insbesondere Druckluft, an bzw. auf dem optischen Element abzugeben. Die Düsenelemente können außerhalb eines Sichtbereichs der optischen Erfassungseinheit angeordnet sein. Denkbar ist, dass die Düsenelemente relativ zu einer Parallelen zu einer Oberfläche des optischen Elements um einen Winkel in einem Bereich größer oder gleich 0° und kleiner oder gleich 30°, bevorzugt steuerbar, verkippbar sind. Die Oberfläche des optischen Elements ist bevorzugt eine transparente, die optische Erfassungseinheit nach außen begrenzende Oberfläche des optischen Elements.

Die pneumatische Reinigungseinheit ist ausgebildet, eine Verschmutzung des optischen Elements mittels eines strömenden Fluids, insbesondere Druckluft, zu reduzieren bzw. zu entfernen. Denkbar ist, dass die Reinigungseinheit ausgebildet ist, eine Strömung des Fluids entlang einer nach außen von der optischen Erfassungseinheit weg gerichteten Oberfläche des optischen Elements zu erzeugen. Hierzu kann die Reinigungseinheit ein oder mehrere Leitelemente, bspw. Luftleitbleche, umfassen, die ausgebildet sind, die Strömung entlang der Oberfläche des optischen Elements zu richten. Die Leitelemente können ausgebildet und angeordnet sein, eine Ausbreitung der Strömung entlang der Oberfläche des optischen Elements vom Mittelpunkt der Oberfläche weg zu begrenzen. Die Strömung kann eine quasi-laminare Strömung sein. Die Strömung kann eine Strömung in einer Ebene parallel zu der Oberfläche des optischen Elements sein.

In einer Ausführungsform können verschiedene Komponenten der Strömung in der Ebene radial zu einem Mittelpunkt der Oberfläche des optischen Elements gerichtet sein. Hierzu sind die Düsenelemente mit den jeweiligen Öffnungen in radialer Richtung hin zum Mittelpunkt der Oberfläche des optischen Elements ausgerichtet. Dadurch kollidieren die verschiedenen Komponenten der Strömung am Mittelpunkt der Oberfläche des optischen Elements, bevorzugt in einem optischen Nahfeld der optischen Erfassungseinheit, und erzeugen eine turbulent expandierende Strömung bzw. eine Druckwelle von dem optischen Element und der optischen Erfassungseinheit weg, um die Verschmutzung mittels der turbulente expandieren Strömung von dem optischen Element zu entfernen.

In einer alternativen Ausführungsform können verschiedene Komponenten der Strömung in der Ebene tangential zu einem Umkreis um einem Mittelpunkt der Oberfläche des optischen Elements gerichtet sein, um eine drallbehaftete, insbesondere zum Mittelpunkt der Oberfläche hin spiralförmige bzw. wirbelförmige, Strömung des Fluids zu erzeugen. Hierzu sind die Düsenelemente mit den jeweiligen Öffnungen in tangentialer Richtung relativ zu einem Umkreis um einen Mittelpunkt der Oberfläche des optischen Elements ausgerichtet. Dadurch ist die Reinigungseinheit ausgebildet, die Verschmutzung mittels der drallbehafteten Strömung zu entfernen bzw. eine Ablagerung von Schmutz zu verhindern.

Hierbei kann die pneumatische Reinigungseinheit derart angeordnet und ausgebildet sein, dass kein mit Druck beaufschlagtes Fluid, insbesondere keine Druckluft, zur Reinigung des optischen Elements durch ein Gehäuse der optischen Erfassungseinheit geleitet wird. Dadurch kann die optische Erfassungseinheit gegenüber einer Umgebung besser staub- und wasserdicht in einer hohen Schutzklasse ausgeführt werden. Weiter kann eine Elektronik der optischen Erfassungseinheit innerhalb des Gehäuses der optischen Erfassungseinheit aufgrund der nicht notwendigen Fluidkanäle, insbesondere Luftleitkanäle, platzsparend kompakt angeordnet werden.

Die flüssigkeitsbasierte Reinigungseinheit ist ausgebildet, eine Flüssigkeit, insbesondere eine Reinigungsflüssigkeit, auf das optische Element abzugeben, um die Verschmutzung des optischen Elements zu verringern bzw. Schmutz auf dem optischen Element zu entfernen. Die Reinigungsflüssigkeit kann als Flüssigkeitsstrahl, insbesondere als druckbeaufschlagter Flüssigkeitsstrahl abgegeben werden. Denkbar ist, dass die Reinigungsflüssigkeit mittels einer oder mehrerer Reinigungsdüsen abgegeben wird. Alternativ kann die Reinigungseinheit eine mechanische Reinigungseinheit umfassen. Die mechanische Reinigungseinheit ist ausgebildet, das optische Element mechanisch mittels eines Reinigungselements zu reinigen bzw. eine Verschmutzung auf einer Oberfläche des optischen Elements mechanisch zu entfernen. Denkbar ist auch, dass die Reinigungseinheit eine Kombination von zumindest zwei der genannten Reinigungseinheiten umfasst. Bevorzugt ist die Reinigungseinheit eine flüssigkeitsbasierte mechanische Reinigungseinheit.

Die Reinigungseinheit kann ein Wischerelement als Reinigungselement und eine Düse zur Abgabe einer Reinigungsflüssigkeit umfassen. Die Reinigungsflüssigkeit ist bevorzugt Wasser. Die Reinigungsflüssigkeit kann auch ein Reinigungsmittel aufweisen. Denkbar ist auch, dass es sich bei der Reinigungsflüssigkeit um die Spritzflüssigkeit handelt. Bevorzugt ist das Wischerelement ein Wischerblatt. Das Wischerelement kann mittels eines Wischerarms mit einer, bevorzugt elektrischen, Motoreinheit verbunden sein, um das Wischerelement entlang des optischen Elements zu führen. Das Wischerelement kann eine Silikonlippe sein. Die Reinigungseinheit ist ausgebildet, die Reinigungsflüssigkeit mittels der Düse vor und/oder während einem Führen des Wischerelements entlang des optischen Elements auf das optische Element abzugeben. Das Wischerelement kann in einer Ruheposition außerhalb eines Sichtfelds oder eines optischen Strahlengangs der optischen Erfassungseinheit angeordnet sein.

Die Reinigungseinheit kann, insbesondere elektronisch, steuerbar sein. Denkbar ist, dass ein Zeitpunkt des Reinigens, eine Häufigkeit des Reinigens, eine Intensität des Reinigens etc. mittels einer Steuersignals einer Steuereinheit der landwirtschaftlichen Spritzvorrichtung steuerbar ist. Zum Beispiel kann eine Größe eines Fluidstroms, ein Volumenstrom der Reinigungsflüssigkeit, ein Druck der Reinigungsflüssigkeit oder eine Geschwindigkeit eines mechanischen Reinigungselements steuerbar sein. Zusätzlich kann die Reinigungseinheit ein oder mehrere, insbesondere elektrische, Heizelemente umfassen, um das optische Element und/oder das auf bzw. an dem optischen Element strömende Fluid zu heizen. Dadurch kann bei hoher Luftfeuchtigkeit und/oder niedriger Umgebungstemperatur eine Beaufschlagung des optischen Elements mit Wasser bzw. Dampf verhindert werden.

Der Schritt des Reinigens in Abhängigkeit von dem vor dem Reinigen ermittelten Verschmutzungsgrad kann von einem Vorliegen einer Verschmutzung und/oder von einem Wert des Verschmutzungsgrades abhängen. Denkbar ist, dass der Schritt des Reinigens automatisiert ausgeführt wird, wenn der vor dem Reinigen ermittelte Verschmutzungsgrad größer als ein Reinigungsschwellwert ist. Der Reinigungsschwellwert kann eine Vorgabe für einen Verschmutzungsgrad des optischen Elements umfassen, bei dessen Überschreiten ein Reinigen des optischen Elements vorteilhaft oder notwendig ist. Der nach dem Reinigen ermittelte Verschmutzungsgrad ist bevorzugt kleiner bzw. geringer als der vor dem Reinigen ermittelte Verschmutzungsgrad. Der Schritt des Abgebens der Spritzflüssigkeit auf die landwirtschaftliche Fläche in Abhängigkeit von dem nach dem Reinigen ermittelten Verschmutzungsgrad kann von einem Vorliegen einer Verschmutzung nach dem Reinigen und/oder von einem Wert des Verschmutzungsgrades nach dem Reinigen abhängen. Durch diese Ausgestaltung kann das optische Element bei einer Verschmutzung vor Abgabe der Spritzflüssigkeit gereinigt werden, um ein unbeeinträchtiges Erfassen der landwirtschaftlichen mittels der optischen Erfassungseinheit vor Abgabe der Spritzflüssigkeit zu ermöglichen.

Vorteilhaft ist es des Weiteren, wenn das Ermitteln des Verschmutzungsgrades und/oder das Reinigen des optischen Elements in Abhängigkeit eines Parameters der landwirtschaftlichen Spritzvorrichtung und/oder eines Umgebungsparameters und/oder eines Pflanzenparameters, insbesondere wiederholt, ausgeführt wird. Der Parameter der landwirtschaftlichen Spritzvorrichtung kann ein technischer Parameter der landwirtschaftlichen Spritzvorrichtung, ein Betriebsparameter der landwirtschaftlichen Spritzvorrichtung und/oder ein Zustand der landwirtschaftlichen Spritzvorrichtung sein. Zum Beispiel kann der Parameter der landwirtschaftlichen Spritzvorrichtung eine räumliche Position der landwirtschaftlichen Spritzvorrichtung, eine Bewegungsgeschwindigkeit bzw. Fahrgeschwindigkeit der landwirtschaftliche Spritzvorrichtung, ein Tankinhalt eines Tanks des landwirtschaftlichen Spritzvorrichtung für die Spritzflüssigkeit oder eine Reinigungsflüssigkeit, ein Signal bspw. eines Beschleunigungssensor zur Detektion einer Wende der landwirtschaftlichen Spritzvorrichtung z. B. in einem Vorgewende etc. sein. Die Fahrgeschwindigkeit kann bspw. mittels ISOBUS an die Recheneinheit zum Ermitteln des Verschmutzungsgrades und/oder der Steuereinheit zum Steuern der Reinigungseinheit in Abhängigkeit von der Fahrgeschwindigkeit übertragen werden. Die räumliche Position der landwirtschaftlichen Spritzvorrichtung kann bspw. mittels eines Real Time Kinematic Global Navigation Satellite Systems (RTK GNSS) an der landwirtschaftlichen Spritzvorrichtung ermittelt und bereitgestellt werden.

Der Umgebungsparameter kann ein Parameter einer Umgebung der landwirtschaftlichen Fläche und/oder einer Umgebung der landwirtschaftlichen Spritzvorrichtung sein. Zum Beispiel kann der Umgebungsparameter ausgewählt sein aus der Gruppe bestehend aus: Luftfeuchtigkeit, Lufttemperatur, Bodentemperatur, Staubkonzentration in der Luft, Bodenbeschaffenheit. Denkbar ist, dass der Umgebungsparameter mittels eines Signals drahtlos oder drahtgebunden an die landwirtschaftliche Spritzvorrichtung übertragen. Denkbar ist auch, dass der Umgebungsparameter alternativ oder zusätzlich mittels einer Sensoreinheit der landwirtschaftlichen Spritzvorrichtung ermittelt wird.

Der Pflanzenparameter kann wie oben beschrieben eine Eigenschaft und/oder ein Zustand der landwirtschaftlichen Fläche und/oder einer Pflanze auf der landwirtschaftlichen Fläche sein.

Denkbar ist, dass das wiederholte Ermitteln des Verschmutzungsgrades und/oder das Reinigen des optischen Elements in kürzeren Zeitabständen erfolgt, wenn die Geschwindigkeit der landwirtschaftlichen Spritzvorrichtung erhöht wird und/oder eine Staubkonzentration in der Luft ansteigt und/oder ein Boden der landwirtschaftlichen Fläche einen verringerten Feuchtigkeitsgrad aufweist. Umgekehrt ist denkbar, dass das wiederholte Ermitteln des Verschmutzungsgrades und/oder das Reinigen des optischen Elements in längeren Zeitabständen erfolgt, wenn die Geschwindigkeit der landwirtschaftlichen Spritzvorrichtung verringert wird und/oder eine Staubkonzentration in der Luft sinkt und/oder ein Boden der landwirtschaftlichen Fläche einen erhöhten Feuchtigkeitsgrad aufweist. Dadurch kann das Ermitteln des Verschmutzungsgrades und/oder das Reinigen des optischen Elements derart angepasst an vorgegebene und/oder vorgebbare Einflussfaktoren angepasst werden, dass das Abgeben der Spritzflüssigkeit besonders effizient und präzise erfolgt.

Vorteilhaft ist es ferner, wenn die landwirtschaftliche Spritzvorrichtung ein Eingabegerät für einen Bediener der landwirtschaftlichen Spritzvorrichtung aufweist, wobei der Schritt des Ermittelns des Verschmutzungsgrades und/oder der Schritt des Abgebens der Spritzflüssigkeit und/oder der Schritt des Reinigens von einer mittels Eingabe in das Eingabegerät vorgegebenen Anweisung des Bedieners der landwirtschaftlichen Spritzvorrichtung abhängt.

Das Eingabegerät kann ein Terminal zur Eingabe und/oder Ausgabe von Daten sein. Das Eingabegerät kann an der landwirtschaftlichen Spritzvorrichtung angeordnet sein, bevorzugt in einer Bedienerkabine der landwirtschaftlichen Spritzvorrichtung. Denkbar ist auch, dass das Eingabegerät ein mobiles Eingabegerät ist, das drahtlos mit der landwirtschaftlichen Spritzvorrichtung verbunden ist. Das Eingabegerät ist ausgebildet, die vorgegebenen Anweisung des Bedieners zu speichern und/oder an eine Recheneinheit und/oder eine Steuereinheit der landwirtschaftlichen Spritzvorrichtung, drahtlos oder drahtgebunden, zu übertragen. Die Eingabe der vorgegebenen Anweisung des Bedieners kann eine Eingabe mittels einer Benutzerschnittstelle bzw. Benutzungsschnittstelle sein. Die Benutzerschnittstelle kann bspw. ein berührungsempfindlicher Bildschirm sein.

Denkbar ist, dass die Anweisung des Bedieners eine Anweisung bzgl. einer Abhängigkeit des Abgebens der Flüssigkeit von dem ermittelten Verschmutzungsgrad umfasst. Die Anweisung kann zum Beispiel sein: "Wenn Verschmutzungsgrad größer als ein definierter oberer Schwellenwert ist, dauerhaftes Abgeben der Spritzflüssigkeit aktivieren, insbesondere optisches Erfassen der landwirtschaftlichen Fläche abbrechen", "Wenn Verschmutzungsgrad größer als ein definierter oberer Schwellenwert ist, Abgeben der Spritzflüssigkeit unterbrechen, insbesondere optisches Erfassen der landwirtschaftlichen Fläche abbrechen", "Wenn Verschmutzungsgrad größer als ein definierter oberer Schwellenwert ist, landwirtschaftliche Spritzvorrichtung anhalten, manuelle Reinigung abwarten", "Wenn Verschmutzungsgrad kleiner als ein definierter unterer Schwellenwert ist, landwirtschaftliche Fläche mittels der optischen Erfassungseinheit optisch erfassen und Spritzflüssigkeit abhängig von der erfassen Fläche abgeben".

Denkbar ist auch, dass die Anweisung des Bedieners eine Anweisung bzgl. einer Abhängigkeit eines Reinigens des optischen Elements von dem ermittelten Verschmutzungsgrad umfasst. Die Anweisung kann zum Beispiel sein: "Wenn Verschmutzungsgrad größer als ein definierter oberer Schwellenwert ist, Reinigen des optischen Elements mittels der Reinigungseinheit aktivieren", "Wenn Verschmutzungsgrad kleiner als ein definierter unterer Schwellenwert ist, Reinigen des optischen Elements mittels der Reinigungseinheit deaktivieren bzw. nicht aktivieren".

Denkbar ist weiter, dass die Anweisung des Bedieners eine Anweisung bzgl. eines Reinigungsparameters einer Reinigungseinheit der landwirtschaftlichen Spritzvorrichtung umfasst. Die Anweisung kann zum Beispiel sein: "Dauerhaftes Ermitteln des Verschmutzungsgrades während Abgebens der Spritzflüssigkeit", "Ermitteln des Verschmutzungsgrades während Abgebens der Spritzflüssigkeit und Reduzieren der Fahrgeschwindigkeit während des Ermittelns", "Dauerhaftes Ermitteln des Verschmutzungsgrades und Abgeben der Spritzflüssigkeit". Hierbei ist denkbar, dass die Anweisung des Bedieners eine Anweisung bzgl. eines oder mehrerer Zeitpunkte zum Ermitteln des Verschmutzungsgrads umfasst. Die Anweisung des Bedieners kann auch eine Anweisung zu einem zeitlichen Abstand bei einem wiederholten Ermitteln des Verschmutzungsgrads umfassen. Dadurch kann das Verfahren besonders komfortabel und flexibel gemäß den Präferenzen eines Bedieners der landwirtschaftlichen Spritzvorrichtung ausgestaltet werden.

Ferner ist es von Vorteil, wenn das Steuergerät eingerichtet ist,
- den Verschmutzungsgrad vor und nach einem Reinigen mittels einer Reinigungseinheit der landwirtschaftlichen Spritzvorrichtung des optischen Elements zu ermitteln,
- die Reinigungseinheit in Abhängigkeit von dem vor dem Reinigen ermittelten Verschmutzungsgrad zu steuern, und
- das Abgeben der Spritzflüssigkeit auf die landwirtschaftliche Fläche in Abhängigkeit von dem nach dem Reinigen ermittelten Verschmutzungsgrad zu steuern.

Das Steuergerät kann drahtlos oder drahtgebunden elektronisch mit der Reinigungseinheit verbunden sein, um die Reinigungseinheit in Abhängigkeit von dem vor dem Reinigen ermittelten Verschmutzungsgrad zu steuern. Dadurch kann eine Steuereinheit bereitgestellt werden, die die Schritte des Ermittelns des Verschmutzungsgrads, des Reinigens des optischen Elements und des Abgebens des Spritzflüssigkeit, bevorzugt zentral, steuert und aufeinander abstimmt, sodass eine Verschmutzung frühzeitig erkannt, eine Reinigung veranlasst und ein effizientes Abgeben der Spritzflüssigkeit sichergestellt werden kann.

Schließlich ist es von Vorteil, wenn die landwirtschaftliche Spritzvorrichtung eine Reinigungseinheit aufweist, wobei
- die Recheneinheit ausgebildet ist, den Verschmutzungsgrad des optischen Elements vor und nach einem Reinigen mittels der Reinigungseinheit der landwirtschaftlichen Spritzvorrichtung zu ermitteln,
- die Reinigungseinheit ausgebildet ist, das optische Element der optischen Erfassungseinheit in Abhängigkeit des vor dem Reinigen ermittelten Verschmutzungsgrades zu reinigen, und
- die Abgabeeinheit ausgebildet ist, die Spritzflüssigkeit in Abhängigkeit von dem nach dem Reinigen ermittelten Verschmutzungsgrad auf die landwirtschaftliche Fläche abzugeben.

Durch diese Ausgestaltung kann eine landwirtschaftliche Spritzvorrichtung bereitgestellt werden, die automatisiert Verschmutzungen des optischen Elements erkennt, entsprechende Gegenmaßnahmen einleitet und ein effizientes Abgeben der Spritzflüssigkeit sicherstellt.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Ausführung bzw. Durchführung, Umsetzung und/oder Steuerung aller Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

### Zeichnungen

Die Erfindung wird nachstehend anhand der beigefügten Zeichnung beispielhaft näher erläutert. Es zeigt:

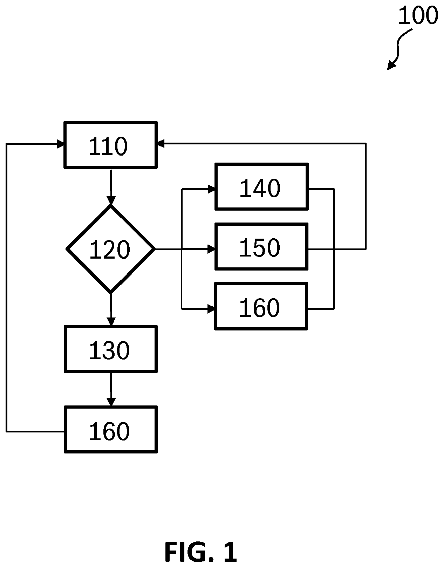

- Fig. 1: ein Ablaufdiagramm eines Verfahrens zur Abgabe einer Spritzflüssigkeit.

In Fig. 1 ist ein Ablaufdiagramm eines Verfahrens zur Abgabe einer Spritzflüssigkeit mittels einer landwirtschaftlichen Spritzvorrichtung dargestellt. Das Verfahren ist in seiner Gesamtheit mit der Bezugsziffer 100 versehen.

Die landwirtschaftliche Spritzvorrichtung ist als Feldspritze mit einem Spritzgestänge ausgebildet. Das Spritzgestänge umfasst mehrere Teilbreiten, wobei an jeder Teilbreite eine Kamera als optische Erfassungseinheit angeordnet ist. Die Kameras sind angeordnet und ausgebildet, je einen Flächenabschnitt einer mittels der Feldspritze zu behandelnden landwirtschaftlichen Fläche zu erfassen. Die Feldspritze umfasst für jede Teilbreite eine Spritzeinheit mit mehreren Spritzdüsen, die entlang des Spritzgestänges angeordnet sind. Die Spritzeinheiten sind ausgebildet, eine in einem Tank der landwirtschaftlichen Spritzvorrichtung bereitgestellte Spritzflüssigkeit auf die landwirtschaftliche Fläche abzugeben. Weiter weist die Feldspritze eine Steuereinheit mit einer Ermittlungseinheit auf. Das nachfolgend beschriebene Verfahren 100 wird unabhängig für jede der Kameras mit der jeweiligen Reinigungseinheit und der zugehörigen Spritzeinheit ausgeführt.

Das Verfahren 100 umfasst einen Schritt 110 des Ermittelns des Verschmutzungsgrades des optischen Elements der optischen Erfassungseinheit, um einen ersten Wert des Verschmutzungsgrades zu ermitteln.

Das Verfahren 100 umfasst weiter einen Schritt 120 des Vergleichens des ersten Wertes des Verschmutzungsgrades mit einem oberen und einem unteren Schwellenwert.

Das Verfahren 100 umfasst darüber hinaus einen Schritt 140 des Reinigens des optischen Elements mittels der Reinigungseinheit, wenn der erste Wert des Verschmutzungsgrades größer oder gleich dem oberen Schwellwert ist.

Das Verfahren 100 umfasst hierbei einen Schritt 150 des Ausgebens eines Warnsignals an einen Bediener der landwirtschaftlichen Spritzvorrichtung, dass eine Verschmutzung des optischen Elements vorliegt.

Das Verfahren 100 umfasst einen Schritt 160 des Abgebens der Spritzflüssigkeit auf die landwirtschaftliche Fläche, wobei die Spritzflüssigkeit dauerhaft abgegeben wird, solange ein ermittelter Wert des Verschmutzungsgrades größer oder gleich dem oberen Schwellenwert ist.

Das Verfahren 100 wird nach den Schritten 140, 150, 160 mit dem Schritt 110 des erneuten Ermittelns des Verschmutzungsgrades des optischen Elements fortgesetzt, um einen zweiten Wert des Verschmutzungsgrades zu ermitteln.

Anschließend wird erneut der Schritt 120 des Vergleichens des nach dem Reinigen ermittelten zweiten Wertes Verschmutzungsgrades mit einem oberen und einem unteren Schwellenwert ausgeführt.

Das Verfahren 100 umfasst einen Schritt 130 des optischen Erfassens der landwirtschaftlichen Fläche mittels der optischen Erfassungseinheit, wenn der zweite Wert des Verschmutzungsgrades kleiner oder gleich dem unteren Schwellenwert ist. Das Verfahren 100 umfasst den Schritt des optischen Erfassens 130 der landwirtschaftlichen Fläche alternativ zu den Schritten 140, 150, 160, wenn der erste Wert des Verschmutzungsgrades kleiner oder gleich dem unteren Schwellenwert ist.

Das Verfahren 100 umfasst schließlich den Schritt des Abgebens 160 der Spritzflüssigkeit auf die landwirtschaftliche Fläche in Abhängigkeit von dem ermittelten Verschmutzungsgrad mittels der Spritzeinheit, wenn der Wert des Verschmutzungsgrades kleiner oder gleich dem unteren Schwellenwert ist.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Abgeben einer Spritzflüssigkeit auf eine landwirtschaftliche Fläche mittels einer landwirtschaftlichen Spritzvorrichtung, die eine optische Erfassungseinheit zum Erfassen (130) der landwirtschaftlichen Fläche und eine Spritzeinheit zum Abgeben (160) der Spritzflüssigkeit aufweist, mit folgenden Schritten:
- Ermitteln (110) eines Verschmutzungsgrades eines optischen Elements der optischen Erfassungseinheit; und
- Abgeben (160) der Spritzflüssigkeit auf die landwirtschaftliche Fläche in Abhängigkeit von dem ermittelten Verschmutzungsgrad mittels der Spritzeinheit.

2. Verfahren (100) nach Anspruch 1, **dadurch gekennzeichnet, dass** bei Überschreiten eines oberen Schwellenwertes des Verschmutzungsgrades
- die Spritzflüssigkeit dauerhaft abgegeben oder das Abgeben (160) der Spritzflüssigkeit unterbrochen und/oder
- ein Warnsignal an einen Bediener der landwirtschaftlichen Spritzvorrichtung ausgegeben und/oder
- ein Steuersignal an eine Antriebseinheit der landwirtschaftlichen Spritzvorrichtung ausgegeben wird.

3. Verfahren (100) nach Anspruch 1 oder 2, **dadurch gekennzeichnet, dass** bei Unterschreiten eines unteren Schwellenwertes des Verschmutzungsgrades die landwirtschaftliche Fläche mittels der optischen Erfassungseinheit erfasst und die Spritzflüssigkeit in Abhängigkeit von der erfassten landwirtschaftlichen Fläche auf die landwirtschaftliche Fläche abgegeben wird.

4. Verfahren (100) nach einem der vorherigen Ansprüche, **dadurch gekennzeichnet, dass** das Ermitteln (110) des Verschmutzungsgrades
- vor dem Abgeben (160) und/oder während des Abgebens (160) der Spritzflüssigkeit auf die landwirtschaftliche Fläche und/oder
- während eines optischen Erfassens (130) der landwirtschaftlichen Fläche mittels der optischen Erfassungseinheit erfolgt.

5. Verfahren (100) nach einem der vorherigen Ansprüche, **gekennzeichnet durch** einen Schritt des Reinigens (140) des optischen Elements mittels einer Reinigungseinheit der landwirtschaftlichen Spritzvorrichtung, wobei
- der Verschmutzungsgrad vor und nach dem Reinigen des optischen Elements ermittelt wird,
- das Reinigen (140) mittels der Reinigungseinheit in Abhängigkeit von dem vor dem Reinigen ermittelten Verschmutzungsgrad erfolgt, und
- das Abgeben (160) der Spritzflüssigkeit auf die landwirtschaftliche Fläche in Abhängigkeit von dem nach dem Reinigen (140) ermittelten Verschmutzungsgrad erfolgt.

6. Verfahren (100) nach einem der vorherigen Ansprüche, **dadurch gekennzeichnet, dass** das Ermitteln (110) des Verschmutzungsgrades und/oder das Reinigen (140) des optischen Elements in Abhängigkeit eines Parameters der landwirtschaftlichen Spritzvorrichtung und/oder eines Umgebungsparameters und/oder eines Pflanzenparameters, insbesondere wiederholt, ausgeführt wird.

7. Verfahren (100) nach einem der vorherigen Ansprüche, wobei die landwirtschaftliche Spritzvorrichtung ein Eingabegerät für einen Bediener der landwirtschaftlichen Spritzvorrichtung aufweist, **dadurch gekennzeichnet, dass** der Schritt des Ermittelns (110) des Verschmutzungsgrades und/oder der Schritt des Abgebens (160) der Spritzflüssigkeit und/oder der Schritt des Reinigens (140) von einer mittels Eingabe in das Eingabegerät vorgegebenen Anweisung des Bedieners der landwirtschaftlichen Spritzvorrichtung abhängt.

8. Steuergerät für eine landwirtschaftliche Spritzvorrichtung, die eine optische Erfassungseinheit mit einem optischen Element und eine Spritzeinheit zum Abgeben (160) einer Spritzflüssigkeit auf eine landwirtschaftliche Fläche aufweist, wobei das Steuergerät eingerichtet ist,
- einen Verschmutzungsgrad des optischen Elements der optischen Erfassungseinheit zu ermitteln, und
- die Spritzeinheit in Abhängigkeit von dem ermittelten Verschmutzungsgrad zu steuern, um die Spritzflüssigkeit auf die landwirtschaftliche Fläche abzugeben.

9. Steuergerät nach Anspruch 8, **dadurch gekennzeichnet, dass** das Steuergerät eingerichtet ist,
- den Verschmutzungsgrad vor und nach einem Reinigen (140) mittels einer Reinigungseinheit der landwirtschaftlichen Spritzvorrichtung des optischen Elements zu ermitteln,
- die Reinigungseinheit in Abhängigkeit von dem vor dem Reinigen (140) ermittelten Verschmutzungsgrad zu steuern, und
- das Abgeben (160) der Spritzflüssigkeit auf die landwirtschaftliche Fläche in Abhängigkeit von dem nach dem Reinigen ermittelten Verschmutzungsgrad zu steuern.

10. Landwirtschaftliche Spritzvorrichtung zur Abgabe einer Spritzflüssigkeit auf eine landwirtschaftliche Fläche, mit
- einer optischen Erfassungseinheit, die ausgebildet ist, die landwirtschaftliche Fläche optisch zu erfassen,
- einer Spritzeinheit, die ausgebildet ist, die Spritzflüssigkeit auf die landwirtschaftliche Fläche abzugeben,
- einem Steuergerät nach Anspruch 8 oder 9.

11. Computerprogramm, umfassend Befehle, die bewirken, dass die landwirtschaftliche Spritzvorrichtung nach Anspruch 10 das Verfahren nach einem der Ansprüche 1 bis 7 ausführt.

12. Maschinenlesbares Speichermedium mit einem darauf gespeicherten Computerprogramm nach Anspruch 11.

## Claims

1. Method (100) for dispensing a spray liquid onto an agricultural area by means of an agricultural spraying device which has an optical detection unit for detecting (130) the agricultural area and a spraying unit for dispensing (160) the spray liquid, comprising the following steps:
- determining (110) a degree of soiling of an optical element of the optical detection unit; and
- dispensing (160) the spray liquid onto the agricultural area by means of the spraying unit as a function of the determined degree of soiling.

2. Method (100) according to Claim 1, **characterized in that** when an upper threshold value of the degree of soiling is exceeded
- the spray liquid is dispensed permanently or the dispensing (160) of the spray liquid is interrupted and/or
- a warning signal is output to an operator of the agricultural spraying device and/or
- a control signal is output to a drive unit of the agricultural spraying device.

3. Method (100) according to Claim 1 or 2, **characterized in that** when the degree of soiling falls below a lower threshold value, the agricultural area is detected by means of the optical detection unit and the spray liquid is dispensed onto the agricultural area as a function of the detected agricultural area.

4. Method (100) according to one of the preceding claims, **characterized in that** the determination (110) of the degree of soiling is carried out
- before the dispensing (160) and/or during the dispensing (160) of the spray liquid onto the agricultural area and/or
- during an optical detection (130) of the agricultural area by means of the optical detection unit.

5. Method (100) according to one of the preceding claims, **characterized by** a step of cleaning (140) the optical element by means of a cleaning unit of the agricultural spraying device, wherein
- the degree of soiling is determined before and after the cleaning of the optical element,
- the cleaning (140) by means of the cleaning unit is carried out as a function of the degree of soiling determined before the cleaning, and
- the dispensing (160) of the spray liquid onto the agricultural area is carried out as a function of the degree of soiling determined after the cleaning (140) .

6. Method (100) according to one of the preceding claims, **characterized in that** the determination (110) of the degree of soiling and/or the cleaning (140) of the optical element is carried out as a function of a parameter of the agricultural spraying device and/or of an environmental parameter and/or of a plant parameter, in particular repeatedly.

7. Method (100) according to one of the preceding claims, wherein the agricultural spraying device has an input device for an operator of the agricultural spraying device, **characterized in that** the step of determining (110) the degree of soiling and/or the step of dispensing (160) the spray liquid and/or the cleaning step (140) depends on an instruction from the operator of the agricultural spraying device, predefined by means of an input into the input device.

8. Control device for an agricultural spraying device which has an optical detection unit with an optical element and a spraying unit for dispensing (160) a spray liquid onto an agricultural area, wherein the control device is configured
- to determine a degree of soiling of the optical element of the optical detection unit, and
- to control the spraying unit as a function of the determined degree of soiling in order to dispense the spray liquid onto the agricultural area.

9. Control device according to Claim 8, **characterized in that** the control device is configured
- to determine the degree of soiling before and after cleaning (140) of the optical element by means of a cleaning unit of the agricultural spraying device,
- to control the cleaning unit as a function of the degree of soiling determined before the cleaning (140), and
- to control the dispensing (160) of the spray liquid onto the agricultural area as a function of the degree of soiling determined after the cleaning.

10. Agricultural spraying device for dispensing a spray liquid onto an agricultural area, comprising
- an optical detection unit which is designed to detect the agricultural area optically,
- a spraying unit which is designed to dispense the spray liquid onto the agricultural area,
- a control device according to Claim 8 or 9.

11. Computer program, comprising commands, the effect of which is that the agricultural spraying device according to Claim 10 carries out the method according to one of Claims 1 to 7.

12. Machine-readable storage medium having a computer program according to Claim 11 stored thereon.

## Revendications

1. Procédé (100) permettant de distribuer un liquide à pulvériser sur une surface agricole au moyen d'un dispositif de pulvérisation agricole qui présente une unité de détection optique pour détecter (130) la surface agricole et une unité de pulvérisation pour distribuer (160) le liquide à pulvériser, comprenant les étapes suivantes consistant à :
- déterminer (110) un degré de salissure d'un élément optique de l'unité de détection optique ; et
- distribuer (160) le liquide à pulvériser sur la surface agricole au moyen de l'unité de pulvérisation en fonction du degré de salissure déterminé.

2. Procédé (100) selon la revendication 1, **caractérisé en ce qu'**en cas de dépassement d'une valeur seuil supérieure du degré de salissure
- le liquide à pulvériser est distribué en permanence ou la distribution (160) du liquide à pulvériser est interrompue, et/ou
- un signal d'avertissement est émis à l'intention d'un opérateur du dispositif de pulvérisation agricole, et/ou
- un signal de commande est émis à une unité d'entraînement du dispositif de pulvérisation agricole.

3. Procédé (100) selon la revendication 1 ou 2, **caractérisé en ce qu'**en cas de soupassement d'une valeur seuil inférieure du degré de salissure, la surface agricole est détectée au moyen de l'unité de détection optique, et le liquide à pulvériser est distribué sur la surface agricole détectée en fonction de la surface agricole détectée.

4. Procédé (100) selon l'une quelconque des revendications précédentes, **caractérisé en ce que** la détermination (110) du degré de salissure est effectuée
- avant la distribution (160) et/ou pendant la distribution (160) du liquide à pulvériser sur la surface agricole, et/ou
- pendant une détection optique (130) de la surface agricole au moyen de l'unité de détection optique.

5. Procédé (100) selon l'une quelconque des revendications précédentes, **caractérisé par** une étape de nettoyage (140) de l'élément optique au moyen d'une unité de nettoyage du dispositif de pulvérisation agricole, dans lequel
- le degré de salissure est déterminé avant et après le nettoyage de l'élément optique,
- le nettoyage (140) est effectué au moyen de l'unité de nettoyage en fonction du degré de salissure déterminé avant le nettoyage, et
- la distribution (160) du liquide à pulvériser sur la surface agricole est effectuée en fonction du degré de salissure déterminé après le nettoyage (140).

6. Procédé (100) selon l'une quelconque des revendications précédentes, **caractérisé en ce que** la détermination (110) du degré de salissure et/ou le nettoyage (140) de l'élément optique sont effectués, en particulier à plusieurs reprises, en fonction d'un paramètre du dispositif de pulvérisation agricole et/ou d'un paramètre d'environnement et/ou d'un paramètre des végétaux.

7. Procédé (100) selon l'une quelconque des revendications précédentes, dans lequel le dispositif de pulvérisation agricole présente un appareil de saisie pour un opérateur du dispositif de pulvérisation agricole, **caractérisé en ce que** l'étape de détermination (110) du degré de salissure et/ou l'étape de distribution (160) du liquide à pulvériser et/ou l'étape de nettoyage (140) dépendent d'une instruction de l'opérateur du dispositif de pulvérisation agricole prédéfinie au moyen d'une saisie sur l'appareil de saisie.

8. Appareil de commande pour un dispositif de pulvérisation agricole qui présente une unité de détection optique pourvue d'un élément optique et une unité de pulvérisation pour distribuer (160) un liquide à pulvériser sur une surface agricole, l'appareil de commande étant conçu pour
- déterminer un degré de salissure de l'élément optique de l'unité de détection optique, et
- commander l'unité de pulvérisation en fonction du degré de salissure déterminé afin de distribuer le liquide à pulvériser sur la surface agricole.

9. Appareil de commande selon la revendication 8, **caractérisé en ce que** l'appareil de commande est conçu pour
- déterminer le degré de salissure avant et après un nettoyage (140) de l'élément optique au moyen d'une unité de nettoyage du dispositif de pulvérisation agricole,
- commander l'unité de nettoyage en fonction du degré de salissure déterminé avant le nettoyage (140), et
- distribuer (160) le liquide à pulvériser sur la surface agricole en fonction du degré de salissure déterminé après le nettoyage.

10. Dispositif de pulvérisation agricole pour distribuer un liquide à pulvériser sur une surface agricole, comprenant
- une unité de détection optique qui est réalisée pour détecter optiquement la surface agricole,
- une unité de pulvérisation qui est réalisée pour distribuer le liquide à pulvériser sur la surface agricole,
- un appareil de commande selon la revendication 8 ou 9.

11. Programme informatique, comprenant des commandes qui font que le dispositif de pulvérisation agricole selon la revendication 10 exécute le procédé selon l'une quelconque des revendications 1 à 7.

12. Support de stockage lisible par machine, comprenant un programme informatique selon la revendication 11 stocké sur celui-ci.
